# EUROPEAN PATENT APPLICATION

(11) **EP 2 354 782 A2**
(43) Date of publication of application: **10.08.2011**
(21) Application number: 11151961.7
(22) Date of filing: 25.01.2011
(51) Int. Cl.: G01N 21/88, G01N 21/95

(54) **Defect detection apparatus and defect detection method**

(30) Priority: 09.02.2010 JP 2010026766
(71) Applicant: AISIN SEIKI KABUSHIKI KAISHA, Kariya-shi, Aichi 448-8650 (JP)
(72) Inventor: Kozakai, Akira, Kariya-shi Aichi 448-8650 (JP); Toda, Masataka, Kariya-shi Aichi 448-8650 (JP); Kuno, Koji, Kariya-shi Aichi 448-8650 (JP)
(74) Representative: TBK

(57) **Abstract**

A defect detection apparatus, detecting a defect on an inspection surface (Wf) of an inspection object (W), includes a table (3) including a table surface (3f), a lighting device (1) emitting a light to the inspection surface, an image capturing device (2) capturing an image of the inspection surface, a displacement mechanism (4) changing a direction of at least of one of a relative direction of an optical axis of the lighting device relative to the table surface and a relative direction of an optical axis of the image capturing device relative to the table surface, an image data obtaining portion (53) obtaining an image data from images captured by the image capturing device while changing the relative direction, a feature extracting portion (56) extracting a feature (F) representing a reflection characteristic of the inspection surface from the image data, and a defect specification portion (57) specifying a type of the defect on the inspection surface based on the extracted feature.

## Description

### TECHNICAL FIELD

This disclosure generally relates to a defect detection apparatus and a defect detection method for detecting a defect on a surface of an inspection object.

### BACKGROUND DISCUSSION

It is known that various defects are generated on a casting (which will be hereinafter referred to as a workpiece) made of aluminum or the like used as a component of a vehicle and the like. The defects include, for example, a blowhole (a pinhole) in a hollow shape, a stamp formed on a surface of the workpiece because of swarf (e.g., turnings, a cutting chip and the like) being pressed thereon when the workpiece is set on and held by a chuck, chatter marks formed on the surface of the workpiece because of uneven rigidity of the workpiece, and the like. The aforementioned defects on the workpiece may degrade a quality of a product.

Therefore, generally, a visual inspection is conducted for the workpiece in order to check the defects on the surface of the workpiece and in order to ensure the quality of the product. However, the visual inspection on the workpiece may impose a burden on an inspector. Furthermore, because the visual inspection conducted by the inspector is based on a subjective assessment, an inspection result (an assessment) may vary between inspectors.

In order to reduce the drawback mentioned above, there exists a defect inspection method disclosed In, for example, JP2006-208259A. According to the defect inspection method disclosed in JP2006-208259A, light is radiated onto an inspection surface of a workpiece and then, a light reflected by the inspection surface of the workpiece (i.e. a reflection light) is captured by a camera, so that a defect on the inspection surface of the workpiece is detected on the basis of an image captured by the camera. More specifically, according to the defect inspection method disclosed in JP2006-208259A, an intensity of the light when capturing the inspection surface of the workpiece by the camera is adjustable, so that a voltage value generated by an image sensor, which corresponds to a portion of the inspection surface of the workpiece other than the defects, is saturated.

According to the defect inspection method disclosed in JP2006-208259A, the defect such as a blowhole, a stamp and the like may be detected on the surface of the workpiece having uneven cutting surface.

However, according to the defect inspection method disclosed in JP2006-208259A, because the image sensor corresponding to a portion of the inspection surface is set to be saturated by adjusting the intensity of the light, an image sensor corresponding to a shallow defect such as the chatter marks captured by the image sensor and reflecting the light strongly may also be saturated as in the case with the image sensor corresponding to a normal and non-defect inspection surface. Therefore, according to the defect inspection method disclosed in JP2006-208259A, the shallow defect such as the chatter marks and the like may not be accurately detected.

A need thus exists for a defect detection apparatus and a defect detection method, which accurately detect a defect on a surface of an inspection object and which specify a type of the defect formed on the inspection object.

### SUMMARY

According to an aspect of this disclosure, a defect detection apparatus for detecting a defect formed on an inspection surface of an inspection object, the defect detection apparatus includes a table, on which the inspection object is placed, including a table surface having a flat surface, a lighting device emitting a light to the inspection surface of the inspection object, an image capturing device capturing an image of the inspection surface of the inspection object, a displacement mechanism changing a direction of at least of one of a relative direction of an optical axis of the lighting device relative to the table surface and a relative direction of an optical axis of the image capturing device relative to the table surface, an image data obtaining portion obtaining an image data from images, which are captured by the image capturing device while changing the relative direction by the displacement mechanism, a feature extracting portion extracting a feature representing a reflection characteristic of the inspection surface on the basis of the image data, and a defect specification portion specifying a type of the defect formed on the inspection surface of the inspection object on the basis of the extracted feature.

Accordingly, the images of the inspection surface of the inspection object are captured while changing at least one of the relative direction of the optical axis of the lighting device relative to the table surface and the relative direction of the optical axis of the image capturing device relative to the table surface. Accordingly, plural image data, which are obtained by capturing the inspection surface of the inspection object by the image capturing device from different angles, are obtained. A pixel value on the image data represents a value in which the reflection characteristic (i.e. the reflection intensity) of the inspection surface of inspection object is reflected. Therefore, in a case where the image data, which are obtained by capturing the inspection surface of the inspection object from different directions, are used, the reflection characteristic in each image capturing direction may be obtained. Furthermore, the defect has a specific reflection characteristic depending on a type of the defect. Therefore, the type of the defect formed on the inspection surface of the inspection object may be specified by comparing the reflection characteristic, which is obtained as mentioned above, and the reflection characteristic of each defect type. Additionally, the defect type includes a normal portion where no defect is formed on the inspection surface of the inspection object. Hence, a specification of the defect type in this disclosure includes a determination of whether or not the defect exists on the inspection surface of the inspection object and the specification of the type of the defect in a case where the defect is found.

According to another aspect of this disclosure, the feature extracting portion extracts the feature on the basis of at least one of a minimum pixel value of an inspection point Included in the inspection surface on the image data and a maximum pixel value of the inspection point included in the inspection surface on the image data.

It is proved that a reflection intensity at a blowhole is smaller than a reflection intensity at the normal portion or other defect from experiment. Therefore, the blowhole may be distinguished from other defect type on the basis of the maximum value of the reflection intensity. Alternatively, the blowhole and other defect types may be distinguishable on the basis of a ratio between the maximum value of the reflection intensity and the minimum value of the reflection intensity. Still further, it is proved that the reflection intensity of the reflection characteristic of each of the defects other than chatter marks reaches the maximum value in a direction orthogonal to the inspection surface but the reflection intensity at the chatter marks does not reach the maximum value in a direction orthogonal to the inspection surface from experiment. Therefore, the chatter marks may be detected on the basis of an image capturing direction at which the reflection intensity reaches the maximum value.

According to a further aspect of this disclosure, the displacement mechanism changes the direction of the relative direction so that a direction vector indicating a redirected relative direction falls within a predetermined plane surface, which is orthogonal to the table surface, and the feature extracting portion obtains a two-dimensional reflection distribution of an inspection point on the basis of a pixel value of the inspection point included in the inspection surface on the image data and extracts the feature on the basis of the two-dimensional reflection distribution.

Accordingly, the two-dimensional reflection characteristic of the inspection surface of the inspection object may be obtained. Therefore, a feature indicating further detailed reflection characteristic may be obtained, so that the defect type may be specified with higher accuracy. Still further, according to this disclosure, a stamp, a water drop and the like, which are difficult to be specified in a known defect detection device and the defect detection method, may be specified.

It is proved that, in a case where the image of the inspection surface of the inspection object having the chatter marks is captured in a direction parallel to a cutting direction, the prominent reflection characteristic appears, but in a case where the image of the inspection surface of the inspection object having the chatter marks is captured in a direction orthogonal to the cutting direction, any significant difference between the reflection characteristic of the chatter marks and the reflection characteristics of other defect types is not found from experiment.

According to a further aspect of this disclosure, the displacement mechanism changes the direction of the relative direction so that a direction vector indicating a redirected relative direction falls within a predetermined hemisphere on the table surface, and the feature extracting portion obtains a three-dimensional reflection distribution of an inspection point on the basis of a pixel value of the inspection point included in the inspection surface on the image data and extracts the feature on the basis of the three-dimensional reflection distribution.

Accordingly, the three-dimensional reflection characteristic of the inspection surface of the inspection object may be obtained. Therefore, the defect having a prominent characteristic in a specific direction, such as the chatter marks and the like, may also be accurately and appropriately detected.

The reflection characteristic may be quantified by various values.

According to a further aspect of this disclosure, the feature extracting portion uses at least one of a reflection intensity of the reflection distribution, the relative direction at which the reflection intensity reaches a maximum value or a minimum value, and a dispersion of the reflection distribution as the feature.

Accordingly, because the defect is detected on the basis of the above-mentioned values as the feature, the defect may be detected (specified) by a simple calculation.

According to a further aspect of this disclosure, the lighting device is set so that the optical axis thereof corresponds to the optical axis of the image capturing device in a coaxial manner.

Accordingly, because the lighting device is configured as a coaxial epi-illuminating device, a size of the defect detection apparatus may be reduced while the lighting device accurately emits the light to a target point.

According to another aspect of this disclosure, a defect detection method for detecting a defect formed on an inspection surface of an inspection object, which is placed on a table surface having a flat surface of a table and to which a light is emitted from a lighting device, the defect detection method includes an image data obtaining step of obtaining an image data from a data captured by an image capturing device, which captures images of the inspection surface of the inspection object, while changing a direction of at least one of a relative direction of an optical axis of the lighting device relative to the table surface and a relative direction of an optical axis of the image capturing device relative to the table surface, a feature extracting step of extracting a feature representing a reflection characteristic of the inspection surface on the basis of the image data, and a determining step of determining whether or not the defect is formed on the inspection surface of the inspection object on the basis of the extracted feature.

Accordingly, the images of the inspection surface of the inspection object are captured while changing at least one of the relative direction of the optical axis of the lighting device relative to the table surface and the relative direction of the optical axis of the image capturing device relative to the table surface. Accordingly, plural image data, which are obtained by capturing the inspection surface of the inspection object by the image capturing device from different angles, are obtained. A pixel value on the image data represents a value in which the reflection characteristic (i.e. the reflection intensity) of the inspection surface of inspection object is reflected. Therefore, in a case where the image data, which are obtained by capturing the inspection surface of the inspection object from different directions, are used, the reflection characteristic in each image capturing direction may be obtained. Furthermore, the defect has a specific reflection characteristic depending on a type of the defect. Therefore, the type of the defect formed on the inspection surface of the inspection object may be specified by comparing the reflection characteristic, which is obtained as mentioned above, and the reflection characteristic of each defect type. Additionally, the defect type includes a normal portion where no defect is formed on the inspection surface of the inspection object. Hence, a specification of the defect type in this disclosure includes a determination of whether or not the defect exists on the inspection surface of the inspection object and the specification of the type of the defect in a case where the defect is found.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a diagram illustrating a configuration example of a defect detection apparatus;

Fig. 2 is a cross-sectional diagram schematically illustrating a lighting device used for the defect detection apparatus;

Fig. 3 is a diagram illustrating a displacement of a relative direction of an optical axis of the lighting device relative to a table and a relative direction of an optical axis of a camera relative to the table;

Fig. 4 is a functional block diagram illustrating a calculation device;

Fig. 5 is a flowchart illustrating a process of a control executed by the defect detection apparatus and a defect detection method according to a first embodiment;

Fig. 6 is a flowchart illustrating a process of a feature extraction process executed by the defect detection apparatus and the defect detection method according to the first embodiment;

Fig. 7 is a flowchart illustrating a process of a defect specification process executed by the defect detection apparatus and the defect detection method according to the first embodiment;

Figs. 8A, 8B. 8C, 8D and 8E are cross-sectional diagrams illustrating defects formed on a workpiece;

Figs. 9A, 9B, 9C, 9D and 9E are diagrams illustrating reflection characteristics of different defects types;

Fig. 10 is a flowchart illustrating a process of a control executed by a defect detection apparatus and a defect detection method according to a second embodiment;

Fig. 11 is a flowchart illustrating a process of a defect specification process executed by the defect detection apparatus and the defect detection method according to the second embodiment; and

Fig. 12 is a diagram illustrating an example of a defect having directional dependence on a reflection intensity distribution.

### DETAILED DESCRIPTION

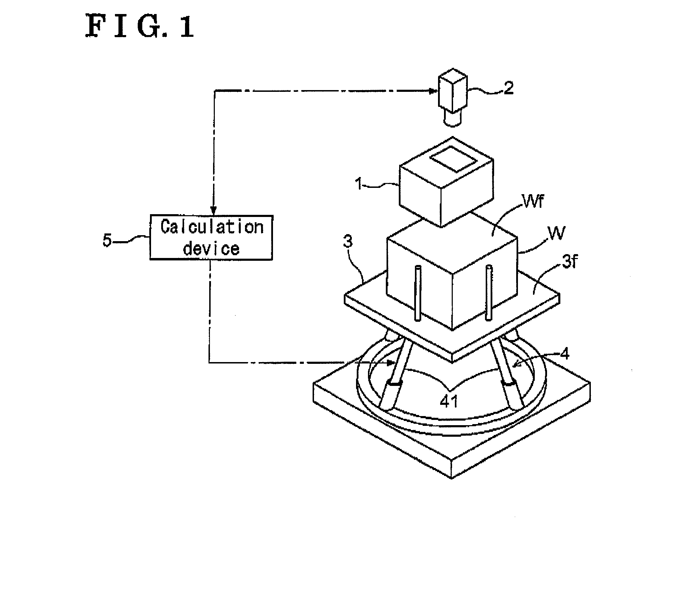

Embodiments of a defect detection apparatus and a defect detection method will be described below with reference to the attached drawings. Illustrated in Fig.1 is a configuration example of the defect detection apparatus according to the embodiments, As illustrated in Fig. 1, the defect detection apparatus includes a lighting device 1 emitting light to a surface targeted for an inspection of a workpiece W (which will be hereinafter referred to as an inspection surface Wf of the workpiece W), a camera 2 (an image capturing device) capturing images of the inspection surface Wf of the workpiece W, a table 3 on which the workpiece W is placed, a displacement mechanism 4 for changing an inclination of a table surface 3f of the table 3 and a calculation device 5 for controlling the entire defect detection apparatus, determining whether or not a defect is found (exists) on the inspection surface Wf of the workpiece W and specifying a defect type based on a data of an image captured by the camera 2, The workpiece W is an example of an inspection object. In the embodiments, the table surface 3f is set to be horizontal when the defect detection apparatus is at an initial position. In this case, X and Y coordinate axes are set on the table surface 3f relative to a center of the table surface 3f as an origin and a Z coordinate axis is set on the table surface 3f in a normal direction thereof (so as to be orthogonal to the table surface 3f), so that the lighting device 1 and the camera 2 are set so that optical axes thereof extend on the Z-axis and so that the optical axes thereof pass through the centre of the table surface 3f from thereabove. In other words, while the defect detection apparatus is at the initial position, the optical axis of the lighting device 1 and the optical axis of the camera 2 extend so as to be orthogonal to the table surface 3f.

<Lighting device>

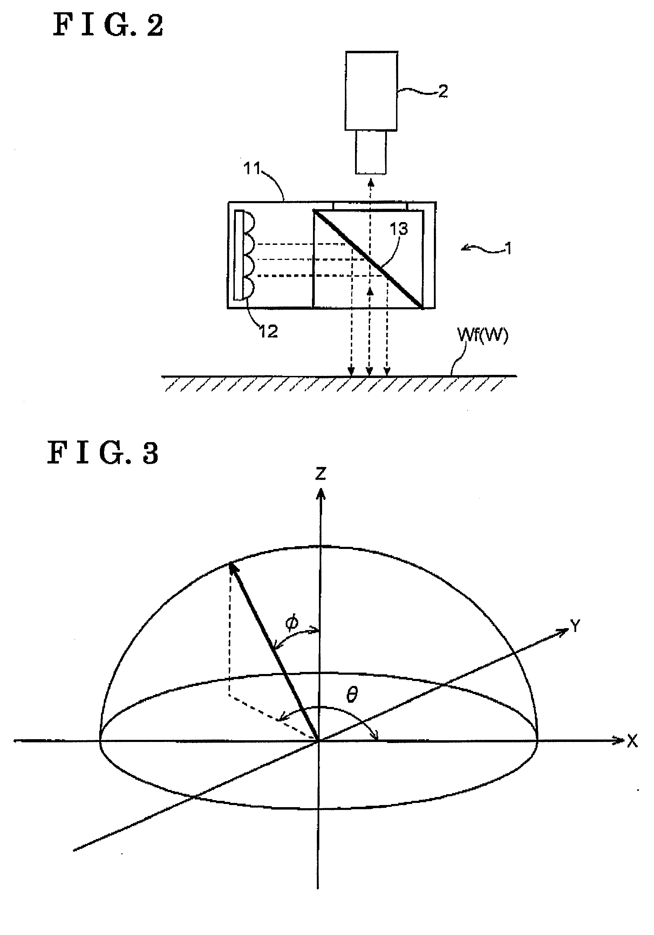

Illustrated in Fig. 2 is a schematic cross-sectional diagram of the lighting device 1. In the embodiments, a coaxial epi-illuminating-type lighting device is adapted as the lighting device 1. More specifically, the lighting device 1 includes a light-emitting diode 12 (which will be hereinafter referred to as a LED 12) and a half mirror 13 within a case 11. The LED 12 emits light in a direction orthogonal to the optical axis of the camera 2. The half mirror 13 is configured so that the light reflected by the workpiece W (i.e. a reflected light) towards the camera 2. Additionally, various light sources may be used instead of the LED 12.

<Camera>

In the embodiments, a monochrome digital camera using an optical element such as a charge coupled device (CCD) and the like is adapted as the camera 2 (the image capturing device). Furthermore, in the embodiments, an output of the camera 2 is set to be an eight binary digit (8 bit) and a pixel value is set in a range between zero (0) and 255 (including zero (0) and 255). In the embodiments, the lighting device 1 and the like is adjusted so that a portion of the inspection surface Wf of the workpiece W having no defect on the captured image becomes approximately 150 pixel value. Additionally, for example, a color digital camera, an analogue camera or the like may be adapted as the camera 2. In a case where the analogue camera is adapted as the camera 2, an analogue-to-digital converter (an A/D converter) may need to be connected to an image data obtaining portion 53 of the calculation device 5.

<Displacement mechanism>

As briefly described above, the defect detection apparatus is configured so that the inclination of the table surface 3f is changeable by the displacement mechanism 4. As illustrated in Fig. 1, the displacement mechanism 4 is configured with four actuators 41, which are provided below the table 3. The displacement mechanism 4 is configured so that the each of actuators 41 is actuated in response to a control signal outputted from the calculation device 5 in order to change the normal direction of the table surface 3f to any desired direction while a center position of the table surface 3f is fixed. In other words, the defect detection apparatus is configured so that the table surface 3f is rotatable (pivotable) about the X-axis and Y-axis. Therefore, a relative direction of the optical axis of the lighting device 1 relative to the table surface 3f and a relative direction of the optical axis of the camera 2 relative to the table surface 3f are changeable in a manner where the inclination of the table surface 3f is changed by the displacement mechanism 4, while the lighting device 1 and the camera 2 are fixed.

An example of changes in the relative direction of the optical axis of the lighting device 1 relative to the table surface 3f and the relative direction of the optical axis of the camera 2 relative to the table surface 3f is indicated in Fig. 3. In the embodiments, because the coaxial lighting device is adapted as the lighting device 1, the relative direction of the optical axis of the lighting device 1 relative to the table surface 3f corresponds to the relative direction of the optical axis of the camera 2 relative to the table surface 3f. Hence, hereinafter, the relative direction of the optical axis of the lighting device 1 relative to the table surface 3f and the relative direction of the optical axis of the camera 2 relative to the table surface 3f will not be distinguished in an explanation below and will be referred to simply as the relative direction. As described above, according to the embodiments, the lighting device 1, the camera 2 and the table surface 3f are set and then, a control is executed by the defect detection device so that the inclination of the table surface 3f is changed. Therefore, a vector representing the relative direction (which will be hereinafter referred to as a relative direction vector) falls within a hemispherical area centering on an origin of the X, Y and Z-coordinates of the table surface 3f, as illustrated in Fig. 3. In other words, the relative direction vector is set as a vector defined by points on a center of a hemisphere and on a hemispheric surface. Accordingly, in the embodiments, the relative direction vector is represented as polar coordinates (8, ϕ), where "θ" in the polar coordinates indicates a deviation angle relative to the X-axis (which will be hereinafter referred to as a first deviation angle), and "ϕ" in the polar coordinates indicates a deviation angle relative to the Z-axis (which will be hereinafter referred to as a second deviation angle). Additionally, in the embodiments, a range of the first deviation angle θ is set to be equal to or greater than zero (0) degree and smaller than 360 degrees (i.e. 0° ≤ θ ≤ 360°). On the other hand, a range of the second deviation angle ϕ is set to be equal to or greater than zero (0) degree and smaller than 60 degrees (i.e. 0° ≤ ≤ < 60°), The inclination of the table surface 3f is controlled so that each of the first and second deviation angles is displaced by a 10 degrees (10°) pitch. The range of each of the first deviation angle θ and the second deviation angle ϕ and a displacement pitch thereof may be changed to any desired angle range and the displacement pitch.

<calculation device>

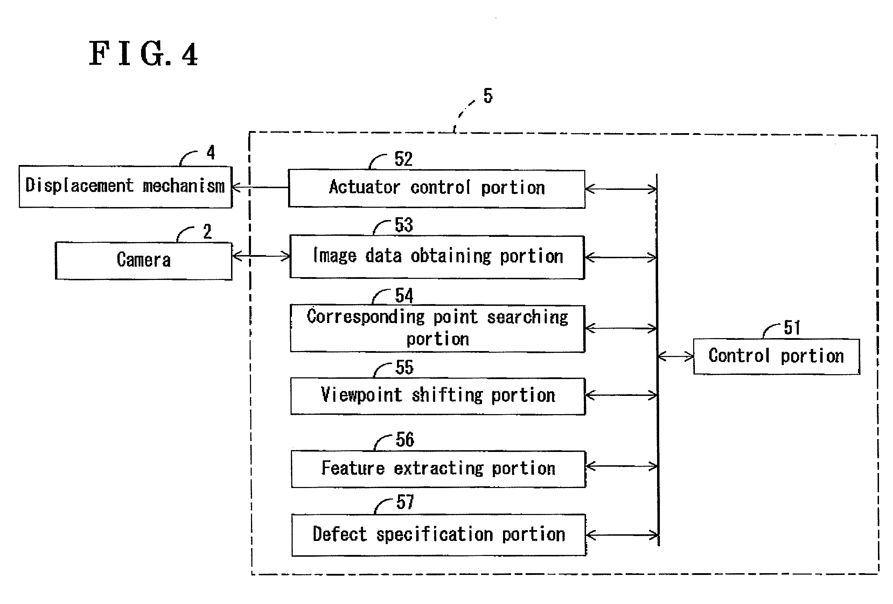

Illustrated in Fig. 4 is a functional block diagram of the calculation device 5 according to the embodiments. As illustrated in Fig. 4, the calculation device 5 includes a control portion 51 for controlling an entire defect detection process (a defect specification process), an actuator control portion 52 for controlling the actuators 41 of the displacement mechanism 4, the image data obtaining portion 53 for commanding the camera 2 to capture the image of the inspection surface Wf of the workpiece W and generating and obtaining the image data based on the image captured by the camera 2, a corresponding point searching portion 54 for searching a corresponding point between a reference image data obtained by the image data obtaining portion 53 and an angle-changed image data (i.e. image data obtained by the camera 2 while changing an angle of the table surface 3f, in other words, each image data shows the inspection surface Wf at different angles), a viewpoint shifting portion 55 for shifting a viewpoint of the angle-changed image data based on a coordinate of the corresponding point searched by the corresponding point searching portion 54, a feature extracting portion 56 for extracting a feature based on the image data whose viewpoint is shifted by the viewpoint shifting portion 55, and a defect specification portion 57 for specifying the defect based on the feature extracted by the feature extracting portion 56. In the embodiments, the calculation device 5 is configured with a general-purpose computer. More specifically, the calculation device 5 is configured so that each functional portion is configured by a software with a central processing unit (CUP) as a core.

The actuator control portion 52 calculates a deformation of each of the actuators 41 of the displacement mechanism 4 in order to incline the table surface 3f of the table 3 in a target direction and in order to control an inclination degree of the table surface 3f of the table 3. Furthermore, the actuator control portion 52 actuates each actuator 41 through a signal line.

The image data obtaining portion 53 sends a signal to the camera 2 via the signal line in order to command the camera 2 to capture the image(s) of the inspection surface Wf of the workpiece W and obtains the image data from the image(s) captured by the camera 2. In a case where a digital still camera is adapted as the camera 2, the image data obtaining portion 53 obtains the captured image of the camera 2 as the image data. On the other hand, in a case where a digital movie camera is adapted as the camera 2, the image data obtaining portion 53 does not need to send the signal to order the camera 2 to capture the image of the inspection surface Wf of the workpiece W. In this case, the image data obtaining portion 53 extracts one frame from images, which are captured by the camera 2 as a movie data, as the image data.

The corresponding point searching portion 54 searches the corresponding point between the reference image data and the angle-changed image data. In the embodiments, the camera 2 captures images of the workpiece W while changing the inclination of the table surface 3f. Therefore, any desired point(s) (which will be hereinafter referred to as an inspection point(s)) on the inspection surface Wf of the workpiece W is not positioned in the same coordinate on each image data. In other words, the inspection point is found in different coordinates on each image data. Therefore, in order to detect and specify a defect on the inspection point, correspondence of pixels between plural image data of the inspection surface Wf captured at different angle positions need to be obtained. For example, one pixel on an image data (i.e. a reference image data), which is captured by the camera 2, while the table surface 3f is at the reference position, i.e. while the table surface 3f is in a horizontal state, is set as the inspection point. Then, a window (e.g. a frame, an area) in a predetermined size is set centering on the inspection point in order to search the corresponding point on other image data (i.e. the angle-changed image data), which are captured by the camera 2 while the inclination of the table surface 3f is changed, on the basis of a known matching method. In this case, any desired known matching method, such as a phase limitation correlation method, a normalized correlation method, a geometric correlation method and the like, may be selected and used. Additionally, one or more of inspection points may be set for the inspection surface Wf on the image data. In the embodiments, further explanation of the defect detection process (the defect specification process) including image processing is given based on the inspection surface Wf having plural inspection points.

The viewpoint shifting portion 55 converts the angle-changed image data into an image data corresponding to an image data to be captured while the table surface 3f is at the reference position (i.e, a viewpoint-shifted image data). The viewpoint shifting portion 55 obtains the inclination (the inclination degree) of the table surface 3f when each angle-changed image data is obtained, i.e. the relative direction vector, from the control portion 51. Furthermore, the viewpoint shifting portion 55 obtains a coordinate of the corresponding point of each of the inspection points for each angle-changed image data from the corresponding point searching portion 54. Then, the viewpoint shifting portion 55 generates the image data on which a viewpoint of the angle-changed image data is shifted to a position where the second deviation angle ϕ is zero (0) degree (i.e. ϕ = 0°) on the basis of the relative direction vector and the coordinate of the corresponding point of each of the inspection points for each angle-changed image data by using a know method such as an affine transformation and the like.

The feature extracting portion 56 extracts the feature of each of the inspection points based on the viewpoint-shifted image data. The inspection point(s) represents any desired point(s) on the inspection surface Wf. However, in this embodiments, each predetermined pixel on the reference image data is considered as each of the inspection points in a processing.

According to the defect detection apparatus having the above-described configuration, because images of the inspection surface Wf are captured by the camera 2 while changing the relative direction of the optical axis of the camera 2 relative to the table surface 3f, reflection intensity of each of the inspection points in each different relative direction (i.e. an example of a reflection distribution and which will be hereinafter referred to as a reflection intensity distribution) may be obtained.

[First embodiment]

In a first embodiment, the defect detection apparatus is configured so as to control the displacement mechanism 4 so that the normal line of the table surface 3f rotates about the X and Y-axes. In other words, the camera 2 captures the images of the inspection surface Wf of the workpiece W while changing both of the first deviation angle θ and the second deviation angle ϕ defining the relative direction vector. Furthermore, in the first embodiment, the feature of each of the inspection points is defined on the basis of a maximum/ minimum pixel value of each of the inspection points at each different angle position and a value of the second deviation angles ϕ formed when a pixel value of the inspection value reaches the maximum/ minimum pixel value. Therefore, when each of the inspection points on the reference data image is set as P (x, y) where each of "x" and "y" represents a coordinate value, a feature F (=x, y) of each of the inspection points is defined as follows: F (x, y) = ((Iₘₗₙ, ϕₘᵢₙ), (I_{max,} ϕₘₐₓ)), where "Iₘᵢₙ" and "Iₘₐₓ" represent the minimum pixel value and the maximum pixel value, respectively, in the case where the images of each of the inspection points are captured from various directions (angles), and "ϕₘᵢₙ" and "ϕₘₐₓ" represent the second deviation angles ϕin the case where each of the inspection points reaches the minimum pixel value and the maximum pixel value, respectively.

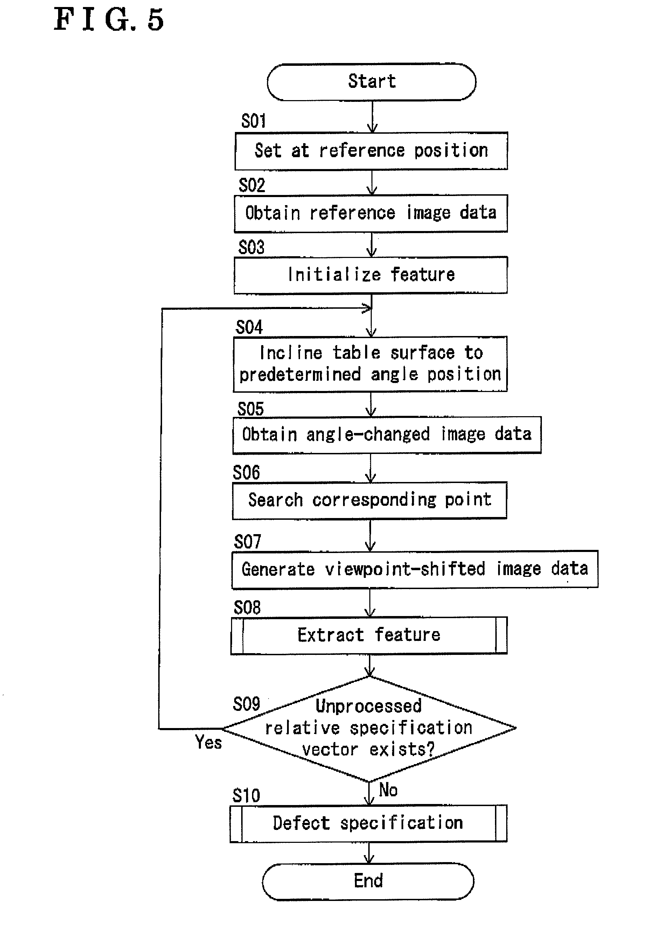

Processes of the control executed by the defect detection apparatus and the defect detection method according to the first embodiment will be described below with reference to a flowchart in Fig. 5. Firstly, the control portion 51 actuates the actuators 41 in order to control the table surface 3f to be at a horizontal position (i.e, the reference position) (step 501). In this case, the control portion 51 sends a command to the image data obtaining portion 53 to obtain the image data, and then, the image data obtaining portion 53, which receives the command from the control portion 51, obtains the image data on the basis of the image captured by the camera 2 as the reference image data (step S02, an image data obtaining step). The obtained reference image data is stored within a memory. Furthermore, the feature F (x, y) of each of the inspection points P is initialized by a following coordinate: (I (x, y), 0), (I (x, y) 0), where "I (x, y)"represents a pixel value of each of the inspection points P (x, y) on the reference image data (step S03).

Then, the control portion 51 actuates the actuators 41 in order to Incline the table surface 3f in the predetermined direction (step S04). In the first embodiment, the control portion 51 memorizes (stores) plural relative direction vectors (θ, ϕ), so that the control portion 51 actuates the actuators 41 in response to each relative direction vector. More specifically, the control portion 51 memorizes the relative direction vectors dₖ = (ϕᵢ, ϕᵢ), where (i = 1, ..., m, j = 1, ..., n, k = 1, ..., m*n), and the control portion 51 selects one of the relative direction vectors dₖ.

In the first embodiment, firstly, an index "k" in the relative direction vector dₖ is initialized by one (1) in order to obtain a relative direction vector d₁. Then, the control portion 51 actuates the actuators 41 in response to a deviation angle represented by the relative direction vector d₁ (step S04).

After the actuation of the actuators 41 is completed, the control portion 51 sends the command to the image data obtaining portion 53 to obtain the image data while the table surface 3f is inclined. The image data obtaining portion 53, which receives the command from the control portion 51, obtains the image(s) as the angle-changed image data (step S05). The obtained angle-changed image data is stored in the memory.

Following the process in step S05, the control portion 51 outputs a command to the corresponding point searching portion 54 to search the corresponding point of each pixel of the reference image data, which is stored within the memory, on the angle-changed image data, which is also stored within the memory. The corresponding point searching portion 54, which receives the command from the control portion 51, obtains the reference image data and the angle-changed image data from the memory, and then, searches the corresponding point by using the correlation method and the like, as described above (step S06). More specifically, the corresponding point searching portion 54 searches a point (corresponding point) on the angle-changed image data corresponding to the inspection point (each pixel). Information of the corresponding point obtained by the corresponding point searching portion 54 is temporarily stored within the memory. More specifically, the coordinate (x, y) of each pixel on the reference image data and a coordinate (x_{d}, y_{d}) of each corresponding point on the angle-changed image data are stored within the memory while relating the coordinate (x, y) and the coordinate (x_{d}, y_{d}). Additionally, displacement (i.e. a displacement amount) (x_{d} - x, y_{d} - y) from the coordinate on the reference image data may be used instead of the coordinate of the corresponding point on the angle-changed image data.

After the search of the corresponding point(s) is completed, the control portion 51 outputs a command to the viewpoint shifting portion 55 to generate the viewpoint-shifted image data based on the angle-changed image data, which is stored within the memory. Simultaneously, the control portion 51 transmits the current relative direction vector dₖ to the viewpoint shifting portion 55. The viewpoint shifting portion 55, which receives the command from the control portion 51, generates the viewpoint-shifted image data from the angle-changed image data based on the relative direction vector dₖ and a positional relationship between each of the inspection points on the reference image data and each of the corresponding points on the angle-changed image data (step S07). The generated viewpoint-shifted image data is stored within the memory.

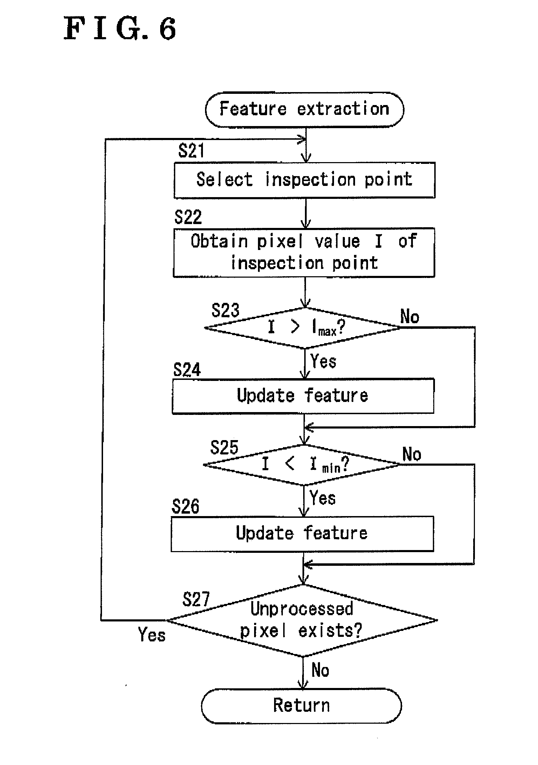

After the generation of the viewpoint-shifted image data is completed, the control portion 51 outputs a command to the feature extracting portion 56 to execute a feature extracting process. The feature extracting portion 56, which receives the command from the control portion 51, extracts the feature (i.e. feature quantity, feature amount) based on the viewpoint-shifted image data, which is stored within the memory (step S08, a feature extracting step). As described above, in the first embodiment, the maximum/ minimum pixel values of each of the inspection points viewed from various angles are used as the feature. Therefore, the feature extracting portion 56 compares each pixel value on the reference image data with the pixel value of each corresponding point on the viewpoint-shifted image data in order to obtain the maximum/ minimum pixel value of each inspection point. The detailed explanation about the process executed in step S08 wilt be described below with reference to a flowchart in Fig. 6.

In the feature extracting process, firstly, one pixel (one inspection point) P (x, y) on the reference image data is selected (step S21), and then, the control portion 51 obtains a pixel value I (x, y) of the pixel P (step S22). Then, the feature extracting portion 56 compares the obtained pixel value l (x, y) with the current feature F (x, y) = ((Iₘᵢₙ, ϕₘᵢₙ), (Iₘₐₓ, ϕₘₐₓ)) and updates the feature F. More specifically, in a case where the obtained pixel value I (x, y) is greater than the maximum pixel value Iₘₐₓ (i.e. I (x, y) > Iₘₐₓ) (Yes in step S23), the maximum pixel value is updated as the pixel value I (x, y) (i.e. Iₘₐₓ = I (x, y)) and a value of the current second deviation angle ϕⱼs a deviation angle to be formed when the pixel value of the inspection point reaches the maximum pixel value is set (step S24). Furthermore, in a case where the obtained pixel value I (x, y) is smaller than the minimum pixel value Iₘᵢₙ (i.e. I (x, y) < Iₘᵢₙ) (Yes in step S25), the feature extracting portion 56 updates the minimum pixel value Iₘᵢₙ as the pixel value I (x, y) (i.e. Iₘᵢₙ = I (x, y)) and a value of the current second deviation angle ϕⱼ as a deviation angle to be formed when the pixel value of the inspection point reaches the minimum pixel value is set (step S26).

The above-mentioned feature extracting process (steps S21 to S26) is repeated until an unprocessed pixel does not exist (No in step S27).

After the feature extraction relative to one angle-changed image data is completed, the control portion 51 checks whether or not an unprocessed relative direction vector dₖ exists (step S09). In a case where the unprocessed relative direction vector dₖ exists (Yes in step S09), the control portion 51 increments the index "k" and specifies a next unprocessed relative direction vector dₖ. Then, the process proceeds to step S04.

Accordingly, the extraction of the feature F (x, y) of each of the inspection points P (x, y) is completed, Additionally, the extraction of the features F of plural inspection points P may be completed simultaneously, however, in order to facilitate the explanation of the process executed by the defect detection apparatus, the explanation of the feature extraction and following processes will be given with the feature F of a single inspection point P as an example in this embodiment, unless otherwise mentioned. The control portion 51 then transmits a command to the defect specification portion 57 to execute a defect specification process. The defect specification portion 57 specifies the defect formed on the inspection surface Wf of the workpiece W in response to the command outputted thereto from the control portion 51 (step S10, a determining step).

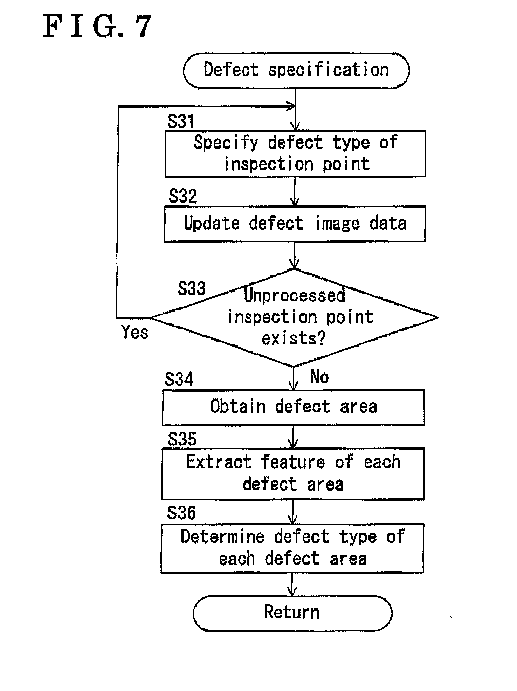

Illustrated in Fig. 7 is a flowchart indicating a flow of a process of the defect specification executed by the defect detection apparatus and the defect detection method according to the first embodiment. In the defect specification process, firstly, the defect specification portion 57 specifies a defect type of the inspection point P (x, y) on the basis of the feature F of the inspection point P (x, y) (step S31). In the first embodiment, the defect type includes "no defect", "a blowhole" and "chatter marks". Therefore, specifying the defect type allows the defect detection apparatus and the defect detection method to determine whether or not the defect exists on the inspection surface Wf of the workpiece W.

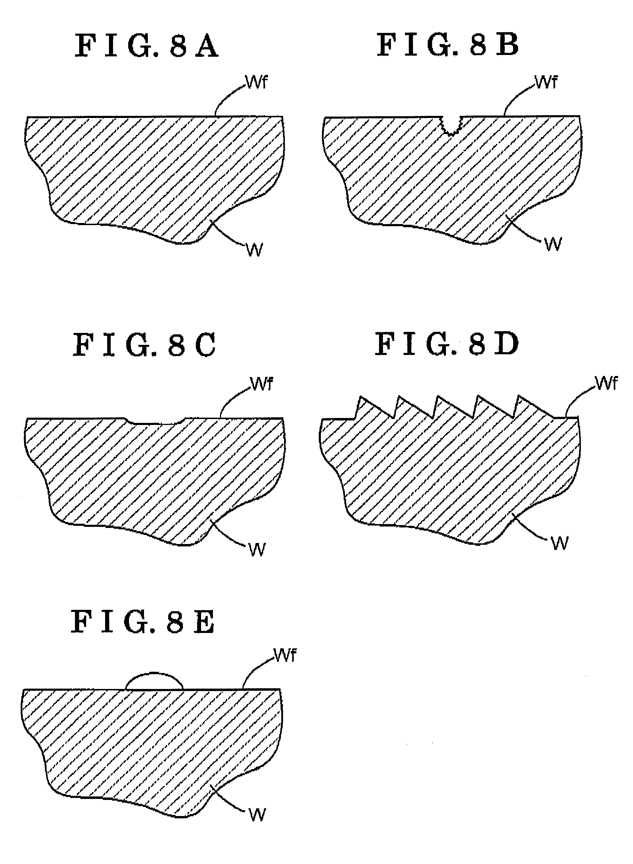

Illustrated in Figs. 8A, 8B, 8C, 8D and 8E are cross-sectional diagrams ofworkpiece W taken along the X-axis of the workpiece W, illustrating each of the defect types. More specifically, illustrated in Fig. 8A is a portion (i.e. a normal portion) of the inspection surface Wf of the workpiece W having no defect, Illustrated in Fig. 8B is a portion of the inspection surface Wf of the workpiece W having the blowhole, and illustrated in Fig. 8D is a portion of the inspection surface Wf of the workpiece W having the chatter marks. As is evident from Figs. 8A, 8B, 8C, 8D and 8E, the normal portion forms a flat surface. On the other hand, the blowhole forms a recessed portion. Furthermore, the chatter marks forms an uneven surface in a sawtooth-shape in a cutting direction. Additionally, a single workpiece W may have one or more of the above-mentioned defects. In the following explanation, each defect type is explained with a single workpiece W having all of the above-mentioned defects. Accordingly, plural inspection points are set on the image data in this case.

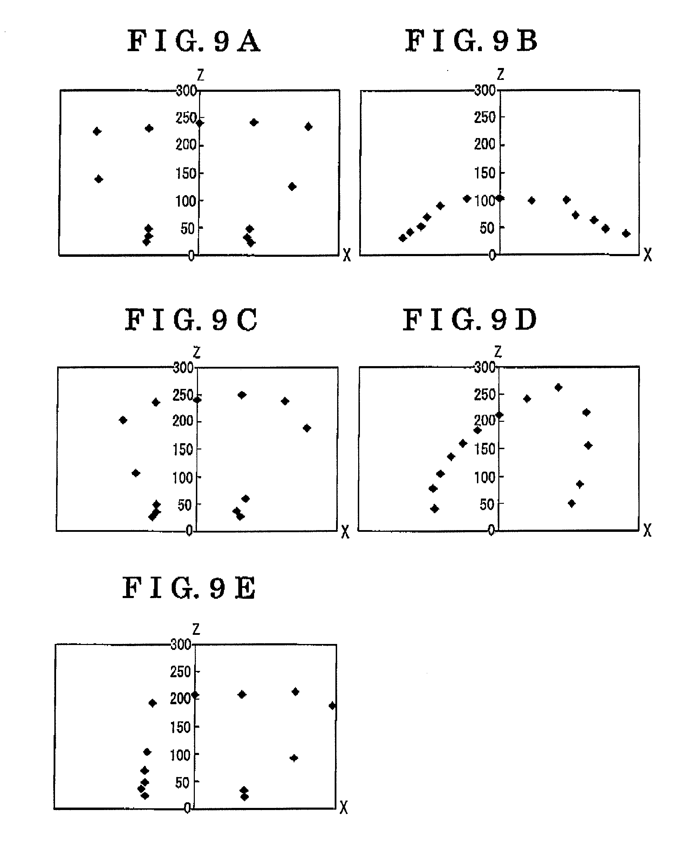

Illustrated in Figs. 9A, 9B, 9C, 9D and 9E are the reflection intensity distributions of the different defect types when being viewed in a Y-axis direction, respectively. More specifically, each of Figs. 9A, 9B, 9C, 9D and 9E illustrates the pixel value of each inspection point obtained on the basis of the reference image data and the angle-changed image data, which is obtained under a condition where the first deviation angle θ is zero degree (0° ) or 180 degrees (180°) (i.e. θ = 0° or 180°) and the second deviation angle ϕ is set to ϕⱼ (i.e. ϕ = ϕⱼ, where j = 1, ..., n). In other words, each of Figs. 9A, 9B, 9C, 9D and 9E is obtained by plotting each of the pixel values of each inspection point on plural viewpoint-shifted image data on a two-dimensional surface as a deviation angle formed on the basis of a radius vector and a value of the corresponding second deviation angle ϕ formed when the angle-changed image data, which is used to generate each of plural viewpoint-shifted image data, is obtained. Illustrated in Fig. 9A is a reflection intensity distribution of the normal portion on the inspection surface Wf of the workpiece W. Illustrated in Fig. 9B is a reflection intensity distribution of the blowhole formed on the inspection surface Wf of the workpiece W. Illustrated in Fig. 9D is a reflection intensity distribution of the chatter marks formed on the inspection surface Wf of the workpiece W.

As is evident from Fig. 9A, a reflection intensity of the normal portion on the inspection surface Wf of the workpiece W is substantially constant in a range where the second deviation angle ϕ is equal to or lower than 20 degrees (20°). However, as a degree of the second deviation angle ϕ increases from 20 degrees (20°), the reflection intensity decreases. Furthermore, the reflection intensity at the normal portion on the inspection surface Wf of the workpiece W appears substantially symmetrical to the Z-axis, in other words, the reflection intensity of the normal portion on the inspection surface Wf of the workpiece W is not influenced by the first deviation angle θ,

On the other hand, a reflection intensity of the blowhole reaches a maximum value when the second deviation angle is about zero degree (0°) including zero degree (0°), as illustrated in Fig. 9B. However, when comparing the reflection intensity distribution illustrated in Fig. 9A and the reflection intensity distribution illustrated in Fig. 9B, a maximum reflection intensity at the blowhole is found to be smaller than a maximum reflection intensity at the normal portion of the inspection surface Wf of the workpiece W. Therefore, the calculation device 5 may determine (specify) whether each of the inspection points P (x, y) corresponds to the normal portion or the blowhole by comparing a predetermined threshold value TH with the maximum pixel value (a maximum reflection intensity) Iₘₐₓ included in the Feature F (x, y) = ((Iₘᵢₙ (ϕₘᵢₙ), (Iₘₐₓ ϕₘₐₓ)) of each of the inspection points P (x, y). In other words, in a case where the maximum reflection intensity Iₘₐₓ of the feature F (x, y) of each of the inspection points P (x, y) is greater than the threshold value TH (i.e. Iₘₐₓ > TH), the inspection point P (x, y) is determined (specified) to correspond to the normal portion. On the other hand, in a case where the maximum reflection intensity Iₘₐₓ of the feature F (x, y) of each of the inspection points P (x, y) is equal to or smaller than the threshold value TH (i.e. Iₘₐₓ ≤ TH), the inspection point P (x, y) is determined (specified) to correspond to the blowhole.

Furthermore, a significant difference is not found between a minimum reflection intensity at the normal portion of the inspection surface Wf of the workpiece W and a minimum reflection intensity at the blowhole of the inspection surface Wf of the workpiece W. Therefore, the calculation device 5 may determine (specifies) whether each of the inspection points corresponds to the normal portion or the blowhole by comparing a ratio between the minimum reflection intensity Iₘᵢₙ and the maximum reflection intensity Iₘₐₓ. of the feature F (x, y) and the predetermined threshold value TH. In other words, in a case where the ratio between the minimum reflection intensity Iₘᵢₙ and the maximum reflection intensity Iₘₐₓ is greater than the predetermined threshold value TH (i.e. Iₘₐₓ/ /Iₘₗₙ > TH), the calculation device 5 determines that the inspection point P (x, y) corresponds to the normal portion. On the other hand, in a case where the ratio between the minimum reflection intensity. Iₘᵢₙ and the maximum reflection intensity Iₘₐₓ is equal to or smaller than the predetermined threshold value TH (i.e. Iₘₐₓ/Iₘᵢₙ ≤ TH), the calculation device 5 determines that the inspection point P (x, y) corresponds to the blowhole.

As is evident from Fig. 9D, a reflection intensity at the chatter marks of the inspection surface Wf of the workpiece W does not reach a maximum value when the second deviation angle Φ is zero degree (i.e. Φ = 0°), because the inspection surface Wf having the chatter marks inclines relative to the table surface 3f, so that the reflection intensity in an inclined direction becomes maximum. Therefore, the calculation device 5 may detect (specify) the chatter marks on the inspection surface Wf of the workpiece W on the basis of the value of the second deviation angle Φ formed when the reflection intensity reaches the maximum value, In other words, in a case where the second deviation angle ϕ formed when the reflection intensity reaches the maximum value is equal to or greater than a minute deviation angle (i.e. ϕₘₐₓ ≥ Δϕ), the calculation device 5 determines that the inspection point corresponds to the chatter marks. Additionally, in this case, the minute deviation angle Δϕ is used in order to eliminate an influence caused by a measurement error and the like.

The determination results obtained in the above-described manner are substituted (added) into the memory as an element of the corresponding reference image data, and [y] and [x] of a two-dimensional array L on the same dimension as the reference image data, which are stored within the memory (step S32). In other words, the determination results are inputted into the memory while being related to the two-dimensional array L in the same dimension as the corresponding reference image data. More specifically, when the normal portion on the inspection surface Wf of the workpiece W is represented by zero (0) and the blowhole on the inspection surface Wf of the workpiece W is represented by one (1), zero (0) is substituted in [y] and [x] of the two dimensional array L (i.e. L [y] [x] = 0) in the case where the inspection point P (x, y) is determined as the normal portion. On the other hand, in the case where the inspection point P (x, y) is determined to correspond to the blowhole, one (1) is substituted in [y] and [x] of the two dimensional array L (i.e. L [y] [x] = 1). Accordingly, two dimensional data indicating different defect types may be generated. The two dimensional data may be considered as an image data in which each different defect type is represented by the pixel value. Hereinafter, the two dimensional data is referred to as a defect image data.

The defect specification portion 57 repeats the above-described processes (step S31 to S32) until the defect specification of all of the inspection points P (x, y) is completed (step S33).

After the defect specification of all of the inspection points P (x, y) is completed (No in step S33), the defect specification portion 57 executes a process of labeling neighboring pixels having the same pixel value on the defect image data as one area (which will be hereinafter referred to as a defect area) (step S34). For example, the defect specification portion 57 executes a multiple value labeling process to the defect image data. As a result, pixels having the same label belong to the same defect area.

The defect specification portion 57 extracts the feature of each defect area based on a labeling data (step S35). In this case, dimensions of the defect area, a size of a circumscribed rectangle, a ratio between each side of the circumscribed rectangle, a fillet radius and the like may be used as the feature F.

Then, the defect specification portion 57 examines whether or not the defect specification result is appropriate on the basis of the defect type and the feature at each defect area (step S36). For example, because an upper limit of a size of the blowhole is predictable, in a case where the dimensions of the defect area, which is determined (specified) as the blowhole, is greater than a predetermined threshold, the calculation device 5 once again determines that the defect area does not correspond to the blowhole. For example, because a product hole formed on the workpiece W has a regulated diameter but the blowhole has various shapes, the product hole and the blowhole may be distinguished from each other by dimensions, diameters, circularity and the like of the product hole and the blowhole. Additionally, the feature of the defect area may be obtained in any other desired method, and determination (examination) of the feature F of the defect area may be executed by any other desired method.

After the defect type of each inspection point P is specified on the basis of the reflection intensity distribution as in the above-described manner, plural inspection points having the same defect type are labeled as one defect area in order to determine whether or not the defect area is considered as the defect. Accordingly, determination (specification) accuracy in the defect specification may be increased.

[Second embodiment]

A second embodiment of the defect detection apparatus and the defect detection method will be described below. In the second embodiment, the first deviation angle θ in the relative direction vector is set (limited) to zero degree (0°) and 180 degrees (180°). Therefore, in the second embodiment, the control portion 51 memorizes the relative direction vectors dₖ = (θᵢ, ϕₗ) (where i = 1, 2, j = 1, ..., n, k = 1,...,2*n). Additionally, an index "i" being one (1) indicates that the first deviation angle θ is zero degree (0°) (i.e. θ₁ = 0°) and the index "i" being two (2) indicates that the first deviation angle θ is 180 degrees (180°) (i.e. θ₂ = 180°). Hence, according to the second embodiment, because the first deviation angle θ is set (limited), the relative direction vector dₖ is set on a XZ-plane, which is orthogonal to the table surface 3f. In other words, in the second embodiment, the lighting device 1 and the camera 2 are displaced relative to the table surface 3f along zero degree (0°) and 180 degrees (180°) in a latitude on the hemisphere on the table surface 3f.

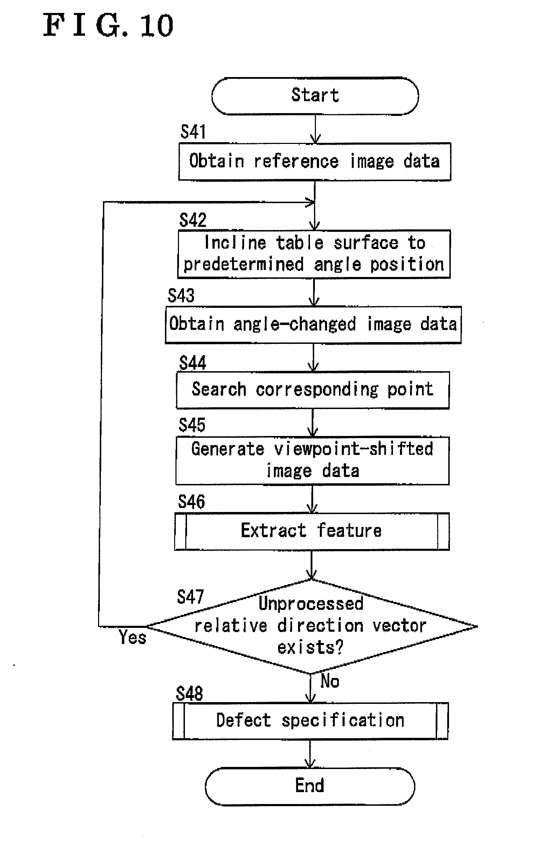

Illustrated in Fig. 10 is a flowchart representing a flow of processes executed by the defect detection apparatus and the defect detection method according to the second embodiment. As is the case with the first embodiment, the control portion 51 firstly controls the actuators 41 so that the table surface 3f becomes horizontal and sends the command to the image data obtaining portion 53 to obtain the image data. Accordingly, the image data obtaining portion 53 obtains the image data as the reference image data based on the image captured by the camera 2 while the table surface 3f is at the horizontal position (step S41, the image data obtaining step). The obtained reference image data is stored within the memory,

Then, the control portion 51 actuates the actuators 41 in order to incline the table surface 3f in the predetermined direction (step S42). As described above, plural relative direction vectors dₖ = (θₗ, ϕⱼ) are memorized within the memory according to the second embodiment, so that the control portion 51 selects one of the relative direction vectors dₖ, In this case, firstly, the index "k" is initialized by one (1) in order to obtain the relative direction vector d₁. Then, the control portion 51 actuates the actuators 41 on the basis of the deviation angle formed when the relative direction vector is d₁ (step S42).

After the actuation of the actuators 41 is completed, the control portion 51 transmits the command to the image data obtaining portion 53 to obtain the image data. Accordingly, the image data obtaining portion 53, which receives the command from the control portion 51, obtains the image(s), which are obtained by the camera 2 while the table surface 3f is inclined, as the angle-changed image data (step S43). The obtained angle-changed image data are stored within the memory.

When the reference image data and the angle-changed image data, which is obtained at a single image capturing angle (position), are obtained, processes similar to the processes from step S06 to step S07 in the first embodiment are executed, thereby generating the viewpoint-shifted image data (steps S44 to S45).

After the viewpoint-shifted image data is generated, the control portion 51 outputs the command to the feature extracting portion 56 to extract the feature F. Accordingly, the feature extracting portion 56, which receives the command from the control portion 51, extracts the feature F (the characteristic amount, the amount of feature) on the basis of the viewpoint-shifted image data (step S46, the feature extracting step). In the second embodiment, the reflection intensity distribution is used as the feature F. Accordingly, the feature F of each of the inspection points P on the reference image data may be represented as follows: F (x, y, dₖ) = I (G (x, y)), where G (x, y) represents a function of coordinate conversion for returning (converting) the coordinate of the corresponding point of the inspection point P (x, y) on the viewpoint-shifted image data to the coordinate on the reference image data. The function G (x, y) may be obtained in a process executed by the corresponding point searching portion 54. Furthermore, "I ()" represents the pixel value on the viewpoint-shifted image data.

After the process executed to one (single) angle-changed image data is completed, the control portion 51 checks whether or not the unprocessed relative direction vector dₖ exists (step S47). In a case where the unprocessed relative direction vector dₖ exists (Yes in step S47), the control portion 51 increments the index k. Then, the process proceeds to step S42.

After the processes executed to all of the predetermined relative direction vectors dₖ is completed in the above-described manner (No in step S47), the control portion 51 outputs the command to the defect specification portion 57 to execute the defect specification process. Accordingly, the defect specification portion 57 executes the defect specification on the basis of the feature F, which is extracted by the feature extracting portion 56 (step S48, the determining step).

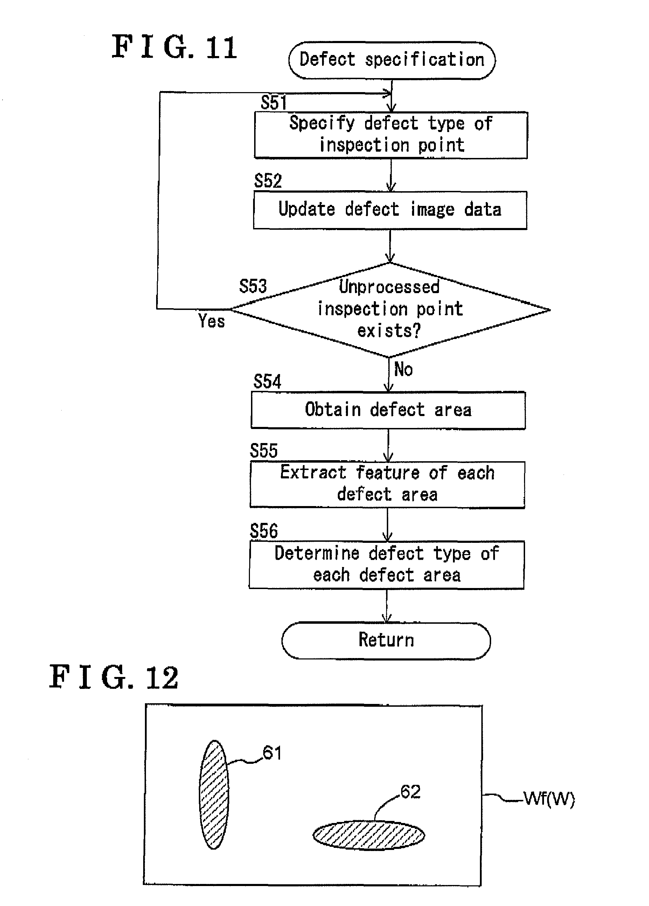

Illustrated in Fig. 11 is a flowchart indicating a flow of the defect specification process according to the second embodiment, In the defect specification process, firstly, the defect specification portion 57 specifies the defect type of each of the inspection points P (x, y) on the reference image data on the basis of the feature F (x, y, dₖ) of the corresponding inspection point P extracted by the feature extracting portion 56 (step S51). The defect type includes "no defect", "the blowhole", "a stamp (an impression)", "the chatter marks" and "a water drop".

As illustrated in Figs. 9A, 9B, 9C, 9D and 9E, each defect type has specific reflection intensity distribution. Illustrated in Fig. 9C is a reflection intensity distribution of the stamp formed on the inspection surface Wf of the workpiece W. Overall, the reflection intensity distribution of the stamp formed on the inspection surface Wf of the workpiece W is similar to the reflection intensity distribution at the normal portion on the inspection surface Wf of the workpiece W. However, changes of the feature F of the stamp formed on the inspection surface Wf of the workpiece W when the inclination of the table surface 3f is changed so that the second deviation angle ϕ is increased by 10 degrees (10°) while the first deviation angle θ is zero degree (0°) (i.e. changes of the feature F from F (x, y, (0°, 20°)) to F (x, y, (0°, 30°))) are considerably smaller than changes in the feature F at the normal portion on the inspection surface Wf of the workpiece W when the inclination of the table surface 3f is changed so that the second deviation angle ϕ is increased by 10 degrees (10°) while the first deviation angle θ is zero degree (0°) (i.e. changes of the feature F from F (x, y, (0°, 20°)) to F (x, y, (0°, 30°))). On the other hand, changes of the feature F of the stamp formed on the inspection surface Wf of the workpiece W when the inclination of the table surface 3f is changed so that the second deviation angle ϕ is increased by 10 degrees (10°) while the first deviation angle θ is 180 degrees (180°) (i.e. the changes of the feature F from F(x, y, (180°, 20°)) to F (x, y, (180°, 30°))) is considerably greater than changes of the feature F at the normal portion on the inspection surface Wf of the workpiece W when the inclination of the table surface 3f is changed so that the second deviation angle ϕ is increased by 10 degrees (10°) while the first deviation angle θ is 180 degrees (180°) (i.e, the changes of the feature F from F (x, y, (180°, 20°)) to F (x, y, (180°, 30°))).

As described above, in the case where the defect type corresponds to the chatter marks, an angle at which the maximum reflection intensity is found is displaced from the second deviation angle ϕ (= 0°). On the other hand, as illustrated in Fig. 9E, a reflection intensity distribution of the water drop on the inspection surface Wf of the workpiece W has a low symmetry relative to the Z-axis. As a result, the reflection intensity, in the case where the defect type corresponds to the water drop distributes, is found overall unevenly towards the X-axis direction. Furthermore, characteristics of the reflection intensity distributions of the normal portion and the blowhole on the inspection surface Wf of the workpiece W are as described above.

Accordingly, the defect type may be specified in a manner where a value, which is obtained by quantifying the characteristic of the reflection intensity distribution of each defect type (which will be hereinafter referred to as a distribution characteristic), is extracted as the feature F. For example, a shape of an envelope of the reflection intensity distribution may be used as the distribution characteristic. In this case, the distribution characteristic of the feature F (x, y, dₖ) may be obtained in a manner where points of the deviation angle ϕ and points of the radius vector F (x, y, dₖ) are plotted on the XZ-plane and connecting those points to form the envelope. The distribution characteristic is not limited to the above-mentioned value and the shape of the envelope. For example, various values may be used as the distribution characteristic as long as being adaptable to be used in the defect determination process and as long as calculable from the reflection intensity distribution such as the relative direction vector, at which the reflection intensity reaches the maximum value, an area defined (surrounded) by a closed curve in a case where the above-mentioned envelope is used as the closed curve, a density distribution of the points of the deviation angle ϕ and the points of the radius vector F (x, y, dₖ), which are plotted on the XZ-plane, and the like.

Accordingly, as is the case with the first embodiment, after the defect type of each of the inspection points P (x, y) on the reference image data is specified, the defect specification result is substituted into the defect image data (step S52), in other words, the defect specification result is added to the defect image data so as to be related thereto. In the second embodiment, the number indicating the defect type (e.g., the normal portion: zero (0), the blowhole: one (1), the stamp: two (2), the chatter marks: three (3), and the water drop: zero (0)) is substituted into the two dimensional array.

The defect specification portion 57 repeats the above-described processes in steps S51 to S 52 until the defect specification of all of the inspection points P (x, y) is completed (No In step S53).

After the defect specification of all of the inspection points P (x, y) is completed (No in step S53), the defect specification portion 57 groups the inspection points according to the defect type based on the defect image data in order to obtain the defect area(s) (step S54). For example, a known multiple value labeling process and the like may be used as the grouping of the inspection points.

Then, as is the case with the first embodiment, the defect specification portion 57 extracts the feature of each defect area (step S55). Following the process executed in step S55, the defect specification portion 57 determines whether or not the result of the defect specification is appropriate on the basis of the defect type of each defect area and the feature F (step S56).

Accordingly, in the second embodiment, the distinction between the normal portion, the blowhole, the stamp, the chatter marks, the water drop and the like may be achievable. A known defect detection apparatus and a defect determination method are likely to determine a water drop on an inspection surface of a workpiece as a defect. However, according to the second embodiment, the defect detection apparatus and the defect detection method may appropriately specify the water drop on the inspection surface Wf of the workpiece W, so that a decrease in a yield rate may be avoided. Furthermore, the defect detection apparatus and the defect detection method according to the second embodiment may properly specify a shallow stamp formed on the inspection surface Wf of the workpiece W, which may result in increasing precision of the product.

[Third embodiment]

A third embodiment of the defect detection apparatus and the defect detection method will be described below, The defect detection apparatus and the defect detection method according to the third embodiment differ from the defect detection apparatus and the defect detection method according to the second embodiment in that the relative direction vector dₖ = (θᵢ, ϕⱼ) (where i = 1, ..., m, j = 1, ..., n, and k =, 1,...m*n) is used instead of the relative direction vector dₖ = (θᵢ, ϕⱼ) (where I =1, 2, j =1, ..., n, and k = 1, ..., 2*n) used in the second embodiment. In other words, in the third embodiment, the camera 2 captures the images of the inspection surface Wf of the workpiece W from along the hemisphere on the table surface 3f.

The processes executed by the defect detection apparatus and the defect detection method according to the third embodiment are similar to the processes executed by the defect detection apparatus and the defect detection method according to the second embodiment. However, because the above-described relative direction vector dₖ is used, the feature F (x, y, dₖ) of each inspection point P (x, y) appears as a three-dimensional distribution, although the feature F (x, y, dₖ) of each inspection point P (x, y) appears as the two-dimensional distribution in the second embodiment. Therefore, in the third embodiment, for example, a three-dimensional feature (i.e. a three-dimensional amount of feature) such as a surface area of an envelope surface and the like may be used as the distribution characteristic of the feature F (x, y, dₖ). Alternatively, the feature of the first deviation angle θ and the feature of the first deviation angle θ+180° may be extracted from the feature F (x, y, dₖ) and the two-dimensional distribution characteristic may be obtained on the basis of the extracted features, as is the case with the second embodiment. In this case, the distribution characteristic in various and plural directions may be obtained while changing the degree of the first deviation angle θ.

As described above, the distribution characteristic of the chatter marks on the inspection surface Wf of the workpiece W appears prominently in the cutting direction. Therefore, in the case where the feature is two-dimensionally extracted as in the case of the second embodiment, if the capturing direction and the cutting direction are displaced from each other, the feature (the characteristic) of the chatter marks are not likely to appear in the distribution characteristic. Hence, the chatter marks on the inspection surface Wf of the workpiece W may not be detected depending on the setting of the relative vector. However, according to the third embodiment, because the three-dimensional characteristic is used, the defect such as the chatter marks, which has a prominent characteristic in a specific direction, may be properly and appropriately detected (specified).

For example, as illustrated in Fig, 12, when supposing that the inspection surface Wf of the workpiece W includes two defects 61 and 62, which have the reflection intensity distributions having different directional dependence from each other, the defect 61 has a significant reflection intensity distribution along the X-axis direction and the defect 62 has a significant reflection intensity distribution along the Y-axis direction. In this case, when the relative direction vector dₖ is set as (0°, ϕ₁), ... (0°, ϕₙ), (180°, ϕ₁).... (180°, ϕₙ), the defect 61 is detectable, but the defect 62 may not be detected. On the other hand, in case where the relative direction vector is set as (90°, ϕ₁), ... (90°, ϕₙ), (270°, ϕ₁), ...(270°, ϕₙ), the defect 62 may be detectable, but the defect 61 may not be detected. However, according to the third embodiment, because the three-dimensional reflection intensity distribution is obtained, the defect showing the reflection intensity distribution having the high directional dependence, may also be properly and appropriately detected.

[Other embodiments]

Other embodiments and modified examples of the above-mentioned embodiments will be described below. In the above-mentioned first embodiment, the camera 2 is fixed. However, in a case where the images of the entire inspection surface Wf of the workpiece W are not obtainable by a single shooting, the defection detection apparatus may be modified so as to horizontally displace the camera 2 or the table 3.

In the above-described embodiments, the relative direction of the optical axis of the lighting device 1 relative to the table surface 3f and the relative direction of the optical axis of the camera 2 relative to the table surface 3f are changeable by inclining the table 3. However, the defect detection apparatus may be modified so as to change the relative directions by using different mechanism. For example, the defect detection apparatus may be modified so as to displace the lighting device 1 and/or the camera 2 while the table 3 is fixed at one position, so that the relative direction of the optical axis of the lighting device 1 relative to the table surface 3f and the relative direction of the optical axis of the camera 2 relative to the table surface 3f are changed. Furthermore, the defect detection apparatus may be modified so that only the relative direction of the optical axis of the lighting device 1 relative to the table surface 3f is changeable in a manner where the lighting device 1 is moved while the table 3 and the camera 2 are fixed at one positions. Still further, the defect detection apparatus may be modified so as to displace the lighting device 1 and the camera 2 separately and independently of each other, so that the relative direction of the optical axis of the lighting device 1 relative to the table surface 3f, the relative direction of the optical axis of the camera 2 relative to the table surface 3f and the relative direction between the optical axis of the lighting device 1 and the optical axis of the camera 2 are changeable. In this case, the feature appears as a bidirectional reflectance distribution function (BRDF).

In the above-described embodiments, the pixel value of the viewpoint-shifted image data is used for the calculation of the feature F. However, the defect detection apparatus and the defect detection method may be modified so as to use a value, which is obtained by normalizing the pixel value of the viewpoint-shifted image data, for the calculation of the feature. In this case, because the pixel value is normalized, an Illuminance level of the lighting device 1 and a reflection characteristic of a material used for the workpiece W may not need to be considered. Accordingly, the defect detection apparatus and the defect detection method may be used for various types of the workpiece W without being influenced by, for example, colors applied on the inspection surface Wf of the workpieces W as long as the workpieces W are formed to have the same shape.

Accordingly, the defect detection apparatus and the defect detection method for detecting and specifying the defect on the inspection surface Wf of the workpiece W is achieved. A defect detection apparatus, detecting a defect on an inspection surface (Wf) of an inspection object (W), includes a table (3) including a table surface (3f), a lighting device (1) emitting a light to the inspection surface, an image capturing device (2) capturing an image of the inspection surface, a displacement mechanism (4) changing a direction of at least of one of a relative direction of an optical axis of the lighting device relative to the table surface and a relative direction of an optical axis of the image capturing device relative to the table surface, an image data obtaining portion (53) obtaining an image data from images captured by the image capturing device while changing the relative direction, a feature extracting portion (56) extracting a feature (F) representing a reflection characteristic of the inspection surface from the image data, and a defect specification portion (57) specifying a type of the defect on the inspection surface based on the extracted feature.

## Claims

1. A defect detection apparatus for detecting a defect formed on an inspection surface (Wf) of an inspection object (W), the defect detection apparatus comprising:
a table (3), on which the inspection object (W) is placed, including a table surface (3f) having a flat surface;
a lighting device (1) emitting a light to the inspection surface (Wf) of the inspection object (W);
an image capturing device (2) capturing an image of the inspection surface (Wf) of the inspection object (W);
a displacement mechanism (4) changing a direction of at least of one of a relative direction of an optical axis of the lighting device (1) relative to the table surface (3f) and a relative direction of an optical axis of the image capturing device (2) relative to the table surface (3f);
an image data obtaining portion (53) obtaining an image data from images, which are captured by the image capturing device (2) while changing the relative direction by the displacement mechanism (4);
a feature extracting portion (56) extracting a feature (F) representing a reflection characteristic of the inspection surface (Wf) on the basis of the image data; and
a defect specification portion (57) specifying a type of the defect formed on the inspection surface (Wf) of the inspection object (W) on the basis of the extracted feature (F).

2. The defect detection apparatus according to Claim 1, wherein the feature extracting portion (56) extracts the feature (F) on the basis of at least one of a minimum pixel value of an inspection point (P) included in the inspection surface (Wf) on the image data and a maximum pixel value of the inspection point (P) included in the inspection surface (Wf) on the image data.

3. The defect detection apparatus according to Claim 1, wherein the displacement mechanism (4) changes the direction of the relative direction so that a direction vector indicating a redirected relative direction falls within a predetermined plane surface, which is orthogonal to the table surface (3f), and the feature extracting portion (56) obtains a two-dimensional reflection distribution of an inspection point on the basis of a pixel value of the inspection point included in the inspection surface (Wf) on the image data and extracts the feature (F) on the basis of the two-dimensional reflection distribution.

4. The defect detection apparatus according to Claim 1, wherein the displacement mechanism (4) changes the direction of the relative direction so that a direction vector indicating a redirected relative direction falls within a predetermined hemisphere on the table surface (3f), and the feature extracting portion (56) obtains a three-dimensional reflection distribution of an inspection point on the basis of a pixel value of the inspection point included in the inspection surface (Wf) on the image data and extracts the feature (F) on the basis of the three-dimensional reflection distribution.

5. The defect detection apparatus according to Claim 3 or Claim 4, wherein the feature extracting portion (56) uses at least one of a reflection intensity of the reflection distribution, the relative direction at which the reflection intensity reaches a maximum value or a minimum value, and a dispersion of the reflection distribution as the feature (F).

6. The defect detection apparatus according to any one of Claims 1 to 5, wherein the lighting device (1) is set so that the optical axis thereof corresponds to the optical axis of the image capturing device (2) in a coaxial manner.

7. A defect detection method for detecting a defect formed on an inspection surface (Wf) of an inspection object (W), which is placed on a table surface (3f) having a flat surface of a table (3) and to which a light is emitted from a lighting device (1), the defect detection method comprising:
an image data obtaining step (S02, S41) of obtaining an image data from a data captured by an image capturing device (2), which captures images of the inspection surface (Wf) of the inspection object (W), while changing a direction of at least one of a relative direction of an optical axis of the lighting device (1) relative to the table surface (3) and a relative direction of an optical axis of the image capturing device (2) relative to the table surface (3);
a feature extracting step (S08, S46) of extracting a feature (F) representing a reflection characteristic of the inspection surface (Wf) on the basis of the image data; and
a determining step (810, S48) of determining whether or not the defect is formed on the inspection surface (Wf) of the inspection object (W) on the basis of the extracted feature (F).
